# FASCICULE DE BREVET EUROPEEN

(11) **EP 2 836 882 B1**
(45) Date de publication et mention de la délivrance du brevet: **27.02.2019**
(21) Numéro de dépôt: 13719957.6
(22) Date de dépôt: 29.03.2013
(51) Int. Cl.: G05D 7/06, G01F 1/00

(54) **DISPOSITIF DE REGULATION DU DEBIT D'UN FLUIDE DANS UNE CANALISATION D'UN RESEAU DE CANALISATIONS**
VORRICHTUNG ZUR REGELUNG DES DURCHFLUSSES EINER FLÜSSIGKEIT IN EINEM ROHR EINES ROHRNETZES
DEVICE FOR REGULATING THE FLOW RATE OF A FLUID IN A PIPE OF A NETWORK OF PIPES

(30) Priorité: 13.04.2012 FR 1253428
(43) Date de publication de la demande: 18.02.2015
(73) Titulaire: VEOLIA PROPRETE, 75008 Paris (FR)
(72) Inventeur: LAGIER, Thomas, 69700 Montagny (FR); LEMOINE, Cyrille, 78500 Sartrouville (FR); RIESENMEY, Caroline, 77600 Bussy Saint Georges (FR); MOLARD, Cédric, 95220 Herblay (FR)
(74) Mandataire: Novagraaf Technologies
(86) Numéro de dépôt international: PCT/FR2013/050707
(87) Numéro de publication internationale: WO 2013/153312

(56) Documents cités:
- WO-A1-2011/057122
- US-A1- 2002 033 420
- US-A1- 2010 011 876
- US-B1- 7 792 126

## Description

La présente invention concerne le domaine de la gestion des débits de fluide dans un réseau de canalisations.

En particulier, l'invention concerne l'extraction de gaz sur des installations de stockage de déchets, provenant par exemple de décharges.

L'invention concerne avantageusement la régulation de l'extraction de gaz produit par la fermentation (méthanisation) de matières organiques, notamment animales et/ou végétales en l'absence d'oxygène, appelé biogaz. Le biogaz est typiquement un mélange composé essentiellement de méthane CH4 et de gaz carbonique CO2, avec des quantités variables d'eau H20, et de sulfure d'hydrogène H2S ainsi parfois que d'autres composés. L'optimisation du processus de captage permet l'optimisation de valorisation du gaz produit durant la méthanisation.

Plus précisément, l'invention concerne selon un premier de ses objets, un dispositif de régulation du débit de biogaz dans une canalisation d'un réseau de canalisations, le dispositif comprenant :
- des moyens de mesure,
- des moyens d'extraction du biogaz dans la canalisation, et
- des moyens de contrôle, configurés pour piloter les moyens d'extraction du biogaz en fonction des mesures effectuées par les moyens de mesure.

Un tel dispositif est connu de l'homme du métier, par exemple du document WO2011/057122 A1.

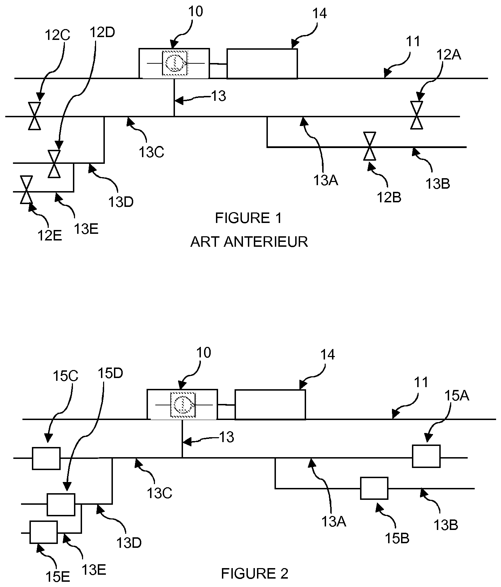

Actuellement, l'extraction de gaz est effectuée comme illustré figure 1, de manière centralisée : la dépression dans le réseau est créée par un pompage central 10 en amont, c'est-à-dire des moyens de pompage fixés sur le sol 11, et l'équilibrage du réseau est réalisé par une succession de vannes 12A, 12B,... 12E, fixées sur une canalisation respective 13A, 13B... 13E du réseau.

Les canalisations 13A, 13B... 13E du réseau peuvent comprendre des ramifications (non illustrées) et sont en général reliées à une canalisation principale 13 reliée elle-même aux moyens de pompage 10.

En aval, le gaz est ensuite envoyé vers des unités de valorisation, une torchère ou d'autres moyens non illustrés.

Pour assurer la régulation de l'extraction, les moyens d'extraction centralisés, en l'espèce une pompe d'extraction 10, créent une dépression dont la valeur absolue de consigne est élevée, dont la valeur absolue de la dépression est par exemple comprise entre 5 et 150 millibar, et sensiblement constante ou variable dans le temps ; et le réglage des vannes 12 permet d'assurer ladite régulation, soit de façon manuelle, soit de façon automatique à partir de moyens de contrôle 14 centralisés et fixés au sol, en fonction des résultats de moyens de mesure (non illustrés sur la figure 1).

Toutefois, cette technique de création d'une forte dépression en amont est suivie de pertes de charge successives tout au long du réseau pour adapter le débit d'extraction. Ce qui peut représenter une perte énergétique importante, puisqu'à chaque perte de charge correspond une perte énergétique et un coût important.

En outre, la centralisation du pompage en amont du réseau entraine une mauvaise répartition de la dépression, avec des zones à proximité du pompage 10 où la dépression est très (trop) forte pour permettre un réglage de vanne précis, et à l'inverse des zones plus éloignées où la dépression n'est pas suffisante pour assurer une extraction optimale. Un inconvénient supplémentaire réside en ce que la très forte dépression dans les zones proches du point de pompage a pour conséquence que de l'air entre dans le réseau de canalisation aérien.

Enfin, des problèmes de fiabilité peuvent avoir lieu car le pilotage de l'extraction est classiquement effectué par des systèmes de commandes centralisés. Or ceux-ci présentent un risque de défaillance entrainant dans ce cas l'arrêt de l'ensemble du réseau par exemple par une perturbation de la communication, une coupure physique de la liaison, ou un dysfonctionnement du système central.

Chacun de ces inconvénients peut en outre être amplifié par le fait qu'en pratique, la plupart des sites d'extraction sont en perpétuelle évolution et modification (ajout de nouvelles canalisations, extension du réseau, travaux, affaissements de terrain).

On notera également qu'une extraction centralisée selon l'art antérieur limite le potentiel de régulation et d'extraction car même avec des vannes 12 ouvertes au maximum, si la dépression centrale créée est insuffisante par rapport à la zone de production, l'extraction ne peut pas être optimale.

Or, ce phénomène est couramment observé du fait que les réseaux sont généralement de grande taille, maillés et en perpétuelle évolution.

La présente invention a pour but de limiter les risques d'exposition à l'un au moins de ces inconvénients en proposant un dispositif particulièrement adaptable.

Avec cet objectif en vue, le dispositif selon l'invention, par ailleurs conforme au préambule cité ci-avant, est essentiellement caractérisé en ce que au moins les moyens d'extraction sont unitaires et mobiles.

Typiquement, les moyens d'extraction comprennent des moyens d'extraction unitaires configurés pour être déportés dans ou vers ladite canalisation.

Ainsi, alors que l'art antérieur vise à réguler l'extraction de biogaz par le pilotage des vannes des canalisations, l'invention permet quant à elle de réguler l'extraction de biogaz par le pilotage des moyens d'extraction.

Dans un mode de réalisation, les moyens d'extraction comprennent des moyens d'extraction centralisés.

Dans un mode de réalisation, le dispositif comprend en outre des moyens de régulation de débit, couplés aux moyens d'extraction et pilotés par les moyens de contrôle.

Dans un mode de réalisation, les moyens d'extraction et les moyens de régulation sont relativement proches l'un de l'autre, par exemple selon une distance prédéterminée. Par exemple, la distance maximale entre eux est 10 mètres et préférentiellement 5 mètres et plus préférentiellement 2 mètres.

Les avantages de cette proximité sont une meilleure compacité du système et donc meilleure transportabilité ; et moins de risque de dégradation des câbles reliant les deux moyens entre eux.

Ce qui est avantageux notamment dans des sites de stockage de déchets dans lesquels transitent des camions qui pourraient rouler sur les câbles disposés à même le sol, car ces câbles ne seront jamais enterrés, pour des questions de transportabilité du système.

Cela permet également de se prémunir vis-à-vis du risque de piquage d'une nouvelle canalisation à destination d'un autre casier de déchets, entre les moyens de régulation et les moyens d'extraction, le piquage de cette nouvelle canalisation, lorsque cette dernière rentrerait en fonctionnement, viendrait perturber le système car les flux de gaz en seraient changés. On aurait le flux sur la canalisation initiale et le flux provenant de la nouvelle canalisation.

Dans un mode de réalisation, on prévoit en outre des moyens de régulation de débit, lesdits moyens de régulation de débit comprenant une électrovanne, couplée aux moyens d'extraction et pilotée par les moyens de contrôle ; et/ou une vanne manuelle.

Dans un mode de réalisation, le dispositif comprend en outre des moyens de communication.

Les moyens de communication permettent par exemple de communiquer avec d'autres équipements du réseau, et/ou avec des moyens de contrôle centralisés s'il en existe.

De préférence, on peut prévoir que les moyens de mesure, et/ou les moyens de contrôle, et/ou les moyens de régulation de débit, et/ou les moyens de communication sont mobiles, optionnellement conjointement aux moyens d'extraction unitaires.

Grâce à cette caractéristique, les moyens d'extraction sont transportables d'un point de la canalisation à un autre, ou d'une canalisation à une autre, ce qui permet notamment de déporter localement l'extraction du gaz donc de limiter les pertes de charges, et de pouvoir réutiliser, adapter, un même dispositif lors de l'extension d'un réseau.

On peut ainsi obtenir un dispositif autonome.

En outre, l'extraction de biogaz peut ainsi être localisée au plus près de la zone de production. Elle peut également être complétée avantageusement par une pluralité de moyens d'extraction placés en série sur une même canalisation.

Dans un mode de réalisation, on peut prévoir d'intégrer le dispositif dans un boîtier déportable intégrant au moins les moyens d'extraction déportés et les moyens de contrôle déportés 14' .

De préférence, les moyens de mesure sont configurés pour mesurer des paramètres intrinsèques au fluide, et/ou des paramètres intrinsèques à la canalisation, et/ou des paramètres intrinsèques à une autre canalisation, et/ou des paramètres extrinsèques au réseau.

Dans un mode de réalisation, le dispositif comprend en outre des moyens de mise à jour des moyens de contrôle.

Selon un autre de ses objets, l'invention concerne également un réseau de canalisations susceptible de transporter du biogaz dans une au moins de ses canalisations, le réseau étant équipé d'un dispositif de régulation du débit du fluide selon l'invention.

Selon l'invention, le réseau est essentiellement caractérisé en ce qu'il comprend une pluralité de moyens d'extraction unitaires ou boitiers déportés disposés localement.

De préférence, les moyens d'extraction unitaires sont configurés pour exercer une extraction dont la valeur de consigne est supérieure en valeur absolue à la valeur de consigne de l'extraction exercée par les moyens d'extraction centralisés.

Ce qui permet une réduction de la consommation énergétique et une diminution de la dépression dans le réseau en cas d'éventuelles fuites dans le réseau.

Les moyens de contrôle déportés sont optionnellement couplés à des moyens de contrôle centralisés. On peut prévoir que les moyens de communication permettent le couplage des moyens de contrôle centralisés et des moyens de contrôle déportés.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation d'un réseau selon l'art antérieur,
- la figure 2 illustre un mode de réalisation du réseau selon l'invention, et

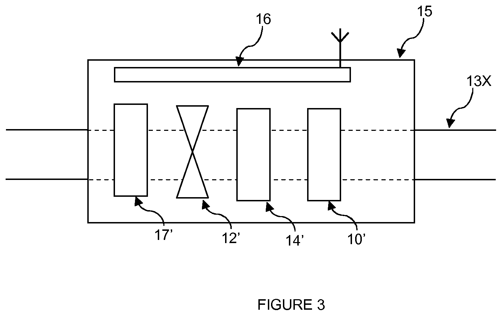

- la figure 3 illustre un mode de réalisation du dispositif selon l'invention.

Selon l'invention, dont un mode de réalisation est illustré figure 2, le réseau comprend une pluralité de moyens d'extraction unitaires, dont chaque est disposé localement.

L'avantage d'une telle configuration est, comme décrit précédemment, de pouvoir optimiser l'extraction de biogaz et de limiter les pertes de charge.

A cet effet, le dispositif selon l'invention comprend des moyens de mesure, des moyens de contrôle, des moyens d'extraction, et optionnellement en outre des moyens de régulation de débit et des moyens de communication.

Les moyens de mesure, par exemple des capteurs 17', sont configurés par exemple pour mesurer la valeur de l'un au moins des paramètres intrinsèques au fluide parmi la température, la concentration en méthane, en dioxyde de carbone, et en oxygène. Pour la mesure de paramètres intrinsèques, les capteurs 17' sont disposés au moins partiellement dans la canalisation 13X.

Ils peuvent également ou alternativement être configurés pour mesurer la valeur de l'un au moins des paramètres intrinsèques à la canalisation 13X tels que la pression relative (relative à la pression atmosphérique), ou le débit. Pour la mesure de paramètres extrinsèques, les capteurs 17' sont disposés au moins partiellement dans la canalisation 13X.

Ils peuvent également ou alternativement être configurés pour mesurer des paramètres extrinsèques au réseau, tels que la température extérieure ou la pression atmosphérique. Dans ce cas, ils sont généralement disposés à l'air libre.

Par le suffixe « X » de canalisation 13X, on entend une généralisation de l'une des canalisations 13A à 13E ou une autre canalisation ou ramification du réseau.

Les moyens de mesure 17' sont reliés par des liaisons filaires ou non à des moyens de contrôle 14, 14', par exemple par des moyens de communication 16.

Les moyens de contrôle 14, 14' sont configurés pour piloter les moyens d'extraction 10, 10', en fonction des mesures effectuées par les moyens de mesure 17'.

Les moyens de contrôle 14' sont décentralisés, c'est-à-dire déportés, positionnés à même la canalisation 13X ou à proximité de celle-ci, et de préférence à proximité des moyens d'extraction unitaires 10'.

Dans un mode de réalisation, on prévoit en outre des moyens de contrôle 14 centralisés, qui à la différence de l'art antérieur, ne sont là que pour coordonner une stratégie d'extraction globale, ce qui permet de tenir compte des différents modes d'exploitation associés à des phénomènes généraux tels que la température extérieure, la pluviométrie, la date d'enfouissement des déchets, une zone en travaux, etc. Dans ce cas, les moyens de contrôle sont en partie centralisés 14 et en partie déportés 14', la partie centralisée 14 communiquant avec la partie 14' par des moyens de communication, par exemple par les moyens de communication 16.

Les moyens d'extraction 10, 10' sont configurés pour extraire le fluide, en l'espèce le biogaz, dans la canalisation 13X (ou depuis celle-ci) et comprennent des moyens de mise en dépression (aspiration) tels qu'une pompe et/ou des moyens de mise en pression (ventilation) tels qu'un ventilateur. Les moyens d'extraction peuvent être unitaires 10' ou centralisés 10.

Selon l'invention, les moyens d'extraction unitaires 10' sont déportés et de préférence mobiles. Avantageusement, le réseau comprend une pluralité de moyens d'extraction 10' unitaires déportés, c'est-à-dire disposés localement.

Les moyens d'extraction centralisés 10 permettent d'exercer une dépression sur l'ensemble du réseau alors que les moyens d'extraction unitaires 10' exercent une dépression localement.

Les moyens d'extraction unitaires 10' comprennent de préférence des moyens de mise en pression, plus économes sur le plan énergétique. Ils sont pilotés par des moyens de contrôle déportés 14'.

Dans un mode de réalisation, les moyens d'extraction comprennent en outre des moyens d'extraction centralisés 10, comme dans l'art antérieur, et pilotés par des moyens de contrôle centralisés 14.

Dans ce cas, les moyens d'extraction unitaires 10' sont configurés pour exercer une extraction dont la valeur de consigne est supérieure en valeur absolue à la valeur absolue de la consigne d'extraction exercée par les moyens d'extraction centralisés 10.

En l'espèce, la consigne d'extraction des moyens d'extraction centralisés 10 peut être une valeur faible (valeur absolue) de dépression, alors que la consigne d'extraction des moyens d'extraction unitaires déportés 10' peut être une valeur relativement importante (valeur absolue) de mise en dépression, la pression relative en aval de ces dispositifs peut être positive. Dans ce cas, il est souhaitable que la pression relative moyenne, dans le réseau, reste négative.

Les moyens de régulation de débit 12', en l'espèce une vanne électro-commandée, sont couplés aux moyens d'extraction 10, 10' et pilotés par les moyens de contrôle 14, 14'.

En variante, on peut prévoir une vanne manuelle au lieu de la vanne électro-commandée. Dans ce cas, elle n'est pas pilotée par les moyens de contrôle. Elle est ajustée en fonction de la comparaison entre la consigne de pression donnée par les moyens de contrôle et la mesure manuelle de la pression relative en amont de la vanne manuelle.

Les moyens de régulation de débit permettent d'augmenter la plage de (dé)pression à atteindre dans la canalisation 13X pour l'extraction du biogaz.

En effet, un extracteur nécessite généralement pour fonctionner un régime minimum qui ne permet pas de régler avec précision les faibles valeurs de la (dé)pression à atteindre. La mise en place d'une vanne par exemple permet d'obtenir un réglage plus fin. Il peut être envisagé de passer d'un mode de fonctionnement à un autre en fonction des évolutions du réseau et de la production locale de biogaz. Ceci permet d'obtenir une plus grande souplesse de fonctionnement et une sécurité supplémentaire du fait du rôle de sectionnement que peut jouer la vanne.

Les moyens de régulation 12' sont éventuellement mobiles conjointement aux moyens d'extraction 10'.

Le dispositif selon l'invention peut comprendre en outre des moyens de communication 16, filaires ou non. Les moyens de communication 16 sont configurés par exemple pour transmettre les informations nécessaires aux moyens de contrôle 14, 14', par exemple les valeurs des résultats des moyens de mesure 17', les valeurs de consigne à appliquer aux moyens de régulation de débit 12' et/ou aux moyens d'extraction 10, 10'.

Le dispositif selon l'invention peut comprendre en outre des moyens de mise à jour (non illustrés) des moyens de contrôle 14, 14', en particulier couplés aux moyens de communication 16.

Les moyens de mise à jour permettent par exemple :
- la mise à jour des moyens de contrôle 14' unitaires locaux et de leur(s) logiciel(s) correspondant,
- l'évaluation des paramètres des softwares,
- le contrôle et l'analyse de l'état du réseau par :
   - des bilans d'activité,
   - des bilans de matière et des indicateurs de performance,
   - la gestion de la maintenance et des astreintes,
   - la modification des consignes à distance,
   - l'ajout d'un système de cartographie,
   - le couplage avec un modèle numérique, et
- la limitation des déplacements de techniciens pour contrôler le fonctionnement ou modifier le système de régulation du réseau.

Le dispositif selon l'invention peut être intégré dans un boîtier 15 déportable, c'est à dire mobile.

Le boîtier 15 comprend au moins des moyens d'extraction déportés 10' et de préférence en outre des moyens de contrôle déportés 14'. En outre il peut comprendre au moins l'un des éléments suivants :
des moyens de mesure déportés 17', des moyens de régulation du débit 12' et des moyens de communication 16.

Le dispositif selon l'invention peut ainsi être autonome, en particulier lorsqu'il comprend en outre des moyens d'alimentation énergétique (non illustrés), par exemple sous forme de batterie et/ou de moyens d'alimentation énergétique à énergie renouvelable, par exemple des moyens photovoltaïques.

Ainsi, la ou les mesure(s) effectuées au niveau local peuvent modifier les consignes d'extraction et donc l'extraction par les moyens d'extraction locaux.

Chaque zone de production peut ainsi contenir une pluralité de dispositifs selon l'invention, 15A, 15B... 15E, éventuellement sous forme de boîtiers, permettant d'assurer de façon autonome l'extraction optimale du biogaz produit.

L'extraction ainsi commandée et déportée sur la zone de production permet de maintenir une extraction optimale au cours du temps.

Les moyens de commande 14' déportés sur la zone de production permettent une meilleure autonomie et une plus grande robustesse du système d'extraction (par exemple en cas de dysfonctionnement de moyens de commande centralisés 14, en cas perte de communication ou de rupture de câble).

La production du biogaz est en général hétérogène dans le temps et dans l'espace. Une même zone peut donc devenir plus ou moins productive au cours du temps. Grâce à la mobilité du dispositif selon l'invention, et à sa simplicité, celui-ci peut être déplacé facilement d'une zone de production à une autre et on peut ainsi optimiser la récupération maximale du biogaz à moindre coût.

Les moyens de contrôle 14, 14' sont adaptés à l'extraction de biogaz, par la configuration de logiciels / algorithmes spécifiques à cette production.

L'invention peut donc être adaptée à d'autres fluides en adaptant lesdits moyens de contrôle 14, 14' et les moyens de mesure 17'.

Comme évoqué précédemment, les moyens d'extraction unitaires 10' permettent d'exercer une dépression localement, typiquement au niveau d'une canalisation de captage de biogaz dans sa partie distale, c'est à dire proche des déchets.

Les moyens d'extraction unitaires 10' sont mobiles, c'est à dire qu'ils peuvent être montés et démontés facilement sur une canalisation, pour être par exemple montés et démontés facilement sur une autre canalisation, en particulier grâce à leur intégration dans un boitier 15.

Par exemple, le montage ou le démontage des moyens d'extraction déportés 10' ou du boitier 15, peut s'effectuer par l'intermédiaire de brides venant se fixer sur une canalisation, par exemple en by-pass ou en remplacement d'une vanne de régulation.

Le démontage des moyens d'extraction déportés 10' ou du boitier 15 est donc aisé pour remettre une canalisation droite entre les brides.

De préférence, le boitier électrique 15 comprend un automate de régulation du débit exercé par les moyens d'extraction déportés 10' et des outils de communications, de préférence sans fil, ce qui facilite la mobilité du boitier.

Le boitier 15 ne pèse typiquement que quelques kilos. L'apport en énergie électrique peut se faire par câble électrique ou en utilisant une énergie renouvelable de type solaire par exemple ce qui rend le boitier 15 totalement autonome.

## Revendications

1. Dispositif de régulation du débit de biogaz dans une canalisation (13X) d'un réseau de canalisations, le dispositif comprenant :
- des moyens (17') de mesure,
- des moyens (10, 10') d'extraction du biogaz dans la canalisation (13X), et
- des moyens (14, 14') de contrôle, configurés pour piloter les moyens d'extraction du biogaz (10, 10') en fonction des mesures effectuées par les moyens de mesure (17'), **caractérisé en ce que** les moyens d'extraction (10, 10')
comprennent des moyens d'extraction (10') configurés pour être déportés dans ou vers ladite canalisation (13X), et **en ce que** au moins lesdits moyens d'extraction (10') configurés pour être déportés sont mobiles.

2. Dispositif selon la revendication 1, dans lequel les moyens d'extraction comprennent des moyens d'extraction centralisés (10).

3. Dispositif selon l'une quelconque des revendications précédentes, comprenant en outre des moyens de régulation de débit, lesdits moyens de régulation de débit comprenant une électrovanne (12'), couplée aux moyens d'extraction (10, 10') et pilotée par les moyens de contrôle (14, 14') ; et/ou une vanne manuelle.

4. Dispositif selon l'une quelconque des revendications précédentes, comprenant en outre des moyens de communication (16) .

5. Dispositif selon l'une quelconque des revendications précédentes, dans lequel les moyens de mesure (17'), et/ou les moyens de contrôle (14'), et/ou les moyens de régulation de débit (12'), et/ou les moyens de communication (16) pouvant en outre être mobiles, conjointement aux moyens d'extraction configurés pour être déportés (10').

6. Dispositif selon l'une quelconque des revendications précédentes, dans lequel les moyens de mesure (17') sont configurés pour mesurer des paramètres intrinsèques au biogaz, et/ou des paramètres intrinsèques à la canalisation (13X), et/ou des paramètres intrinsèques à une autre canalisation, et/ou des paramètres extrinsèques au réseau.

7. Dispositif selon l'une quelconque des revendications précédentes, comprenant en outre des moyens de mise à jour des moyens de contrôle (14, 14').

8. Dispositif selon l'une quelconque des revendications précédentes, comprenant en outre un boîtier (15) déportable intégrant au moins les moyens d'extraction déportés (10') et les moyens de contrôle déportés 14'.

9. Réseau de canalisations susceptible de transporter du biogaz dans au moins une de ses canalisations (13X), le réseau étant équipé d'un dispositif de régulation du débit du biogaz selon l'une quelconque des revendications précédentes,
**caractérisé en ce que** le réseau comprend une pluralité de moyens d'extraction configurés pour être déportés (10') disposés localement.

10. Réseau de canalisations selon la revendication 9, dans lequel les moyens d'extraction configurés pour être déportés (10') sont configurés pour exercer une extraction dont la valeur de consigne est supérieure en valeur absolue à la valeur de consigne de l'extraction exercée par les moyens d'extraction centralisés (10).

11. Réseau de canalisations selon l'une quelconque des revendications 9 ou 10, dans lequel les moyens de contrôle déportés (14') sont couplés à des moyens de contrôle centralisés (14).

## Patentansprüche

1. Vorrichtung zur Regelung des Durchflusses von Biogas in einem Rohr (13X) eines Rohrnetzes, wobei die Vorrichtung umfasst:
- Messmittel (17'),
- Extraktionsmittel (10, 10') des Biogases in dem Rohr (13X), und
- Steuermittel (14, 14'), die konfiguriert sind, um die Extraktionsmittel des Biogases (10, 10') in Abhängigkeit von den von den Messmitteln (17') durchgeführten Messungen zu steuern,
**dadurch gekennzeichnet, dass** die Extraktionsmittel (10, 10') Extraktionsmittel (10') umfassen, die konfiguriert sind, um in dem oder zu dem Rohr (13X) versetzt zu sein und dadurch, dass mindestens die um versetzt zu sein konfigurierten Extraktionsmittel (10') beweglich sind.

2. Vorrichtung nach Anspruch 1, wobei die Extraktionsmittel zentralisierte Extraktionsmittel (10) umfassen.

3. Vorrichtung nach einem der vorangehenden Ansprüche, ferner umfassend Durchflussregelungsmittel, wobei die Durchflussregelungsmittel ein Elektroventil (12'), gekoppelt an die Extraktionsmittel (10, 10') und gesteuert von den Steuermitteln (14, 14'); und/oder ein manuelles Ventil umfassen.

4. Vorrichtung nach einem der vorangehenden Ansprüche, ferner umfassend Kommunikationsmittel (16).

5. Vorrichtung nach einem der vorangehenden Ansprüche, wobei die Messmittel (17') und/oder die Steuermittel (14') und/oder die Durchflussregelungsmittel (12') und/oder die Kommunikationsmittel (16) ferner beweglich sein können, gemeinsam mit den um versetzt zu sein konfigurierten Extraktionsmitteln (10').

6. Vorrichtung nach einem der vorangehenden Ansprüche, wobei die Messmittel (17') konfiguriert sind, um dem Biogas intrinsische Parameter und/oder dem Rohr (13X) intrinsische Parameter und/oder einem anderen Rohr intrinsische Parameter und/oder dem Netz extrinsische Parameter zu messen.

7. Vorrichtung nach einem der vorangehenden Ansprüche, ferner umfassend Aktualisierungsmittel der Steuermittel (14, 14').

8. Vorrichtung nach einem der vorangehenden Ansprüche, ferner umfassend einen versetzbaren Kasten (15), der mindestens die versetzten Extraktionsmittel (10') und die versetzten Steuermittel (14') integriert.

9. Rohrnetz, das imstande ist, Biogas in mindestens einem seiner Rohre (13X) zu transportieren, wobei das Netz mit einer Vorrichtung zur Regulierung des Durchflusses des Biogases nach einem der vorangehenden Ansprüche ausgerüstet ist,
**dadurch gekennzeichnet, dass** das Netz eine Vielzahl von Extraktionsmitteln umfasst, die konfiguriert sind, um lokal versetzt (10') angeordnet zu sein.

10. Rohrnetz nach Anspruch 9, wobei die Extraktionsmittel (10'), die konfiguriert sind, um versetzt zu sein, konfiguriert sind, um eine Extraktion durchzuführen, deren Sollwert in absolutem Wert größer ist als der Sollwert der von den zentralisierten Extraktionsmitteln (10) durchgeführten Extraktion.

11. Rohrnetz nach einem der Ansprüche 9 oder 10, wobei die versetzten Steuermittel (14') an zentralisierte Steuermittel (14) gekoppelt sind.

## Claims

1. Device for regulating the flow rate of biogas in a pipe (13X) of a network of pipes, the device comprising:
- measurement means (17'),
- means (10, 10') for extracting the biogas in the pipe (13X), and
- control means (14, 14'), configured to control the means (10, 10') for extracting the biogas according to the measurements carried out by the measurement means (17'),
**characterised in that** the extraction means (10, 10') comprise extraction means (10') configured to be moved into or towards said pipe (13X), and **in that** at least said extraction means (10') configured to be moved are mobile.

2. Device according to claim 1, wherein the extraction means comprise centralised extraction means (10) .

3. Device according to any one of the previous claims, further comprising means for regulating flow rate, said means for regulating flow rate comprising a solenoid valve (12'), coupled to the extraction means (10, 10') and controlled by the control means (14, 14'); and/or a manual valve.

4. Device according to any one of the previous claims, further comprising communication means (16).

5. Device according to any one of the previous claims, wherein the measurement means (17'), and/or the control means (14'), and/or the means for regulating flow rate (12'), and/or the communication means (16) further capable of being mobile, together with the extraction means configured to be moved (10').

6. Device according to any one of the previous claims, wherein the measurement means (17') are configured to measure parameters intrinsic to the biogas, and/or parameters intrinsic to the pipe (13X), and/or parameters intrinsic to another pipe, and/or parameters intrinsic to the network.

7. Device according to any one of the previous claims, further comprising means for updating the control means (14, 14').

8. Device according to any one of the previous claims, further comprising a moveable case (15) integrating at least the moved extraction means (10') and the moved control means (14').

9. Network of pipes suitable for transporting biogas in at least one of its pipes (13X), the network being equipped with a device for regulating the flow rate of the biogas according to any one of the previous claims,
**characterised in that** the network comprises a plurality of extraction means configured to be moved (10') disposed locally.

10. Network of pipes according to claim 9, wherein the extraction means configured to be moved (10') are configured to carry out an extraction, the setting value of which is greater, in terms of absolute value, than the setting value of the extraction carried out by the centralised extraction means (10).

11. Network of pipes according to any one of claims 9 or 10, wherein the moved control means (14') are coupled to centralised control means (14).
